# EUROPEAN PATENT SPECIFICATION

(11) **EP 2 272 335 B1**
(45) Date of publication and mention of the grant of the patent: **08.02.2017**
(21) Application number: 10250275.4
(22) Date of filing: 17.02.2010
(51) Int. Cl.: A01K 97/02

(54) **Apparatus with a weighted base and upstanding arms for receiving bait for fishing**
Vorrichtung mit einer gewichteten Basis und aufrechtstehenden Armen zur Aufnahme eines Fischköders
Appareil doté d'une base lestée et de bras dressés destinés à recevoir des appâts de pêche

(30) Priority: 11.03.2009 GB 0904227
(43) Date of publication of application: 12.01.2011
(73) Proprietor: Korda Developments LTD, Basildon, Essex SS14 3DA (GB)
(72) Inventor: Bones, Alexander Richard, Coventry CV5 7QB (GB); Clarke, Damian Keith, Colchester Essex C02 0RD (GB); Penning, Adam Heathcote, Chelmsford Essex CM1 2EX (GB)
(74) Representative: Jones, Graham Henry

(56) References cited:
- GB-A- 2 298 115
- GB-A- 2 309 146
- GB-A- 2 436 275
- GB-A- 2 451 874
- JP-A- 2006 204 270

## Description

This invention relates to apparatus for receiving bait for fishing and, more especially, this invention relates to apparatus with a weighted base and upstanding arms for receiving bait for fishing.

Apparatus comprising a weighted base and upstanding arms for receiving bait for fishing is known, see for example GB 2298115A. The known apparatus is often referred to as a method feeder. Bait is placed onto the apparatus and moulded by hand or with a moulding device so that the bait stays on the apparatus, with the arms helping to retain the bait in position. When the apparatus is cast into water, the bait breaks from the apparatus and attracts fish wishing to feed. The known apparatus is inefficient in that the arms are such that a hook and line can get tangled around them. Some of the known designs feature a stem on the rear to which a hook and elastic material are tied. The connection of the elastic material to the stem creates a rig that remains fixed to a large part of the apparatus after a line has been broken by a fish escaping. Thus, even although the fish escapes, it has to tow with it more than is necessary and the fish may often die as a result.

It is an aim of the present invention to obviate or reduce the above mentioned problems.

Accordingly, the present invention provides apparatus for receiving bait for fishing, which apparatus comprises a weighted base, four arms which upstand from the base, a first tubular portion at a front part of the base, a second tubular portion at a rear part of the base, and a platform for receiving some of the bait, wherein:
(i) the four arms define an X-shape;
(ii) the platform is spaced apart from the base; and
(iii) the platform extends traversely with respect to the four arms; and the apparatus being characterised in that:
(iv) in plan view the platform extends beyond sides of the four arms and thereby extends over the base.

The apparatus of the present invention offers optimum grip for the bait. Still further, if required, the first and the second tubular portions are available for receiving a safe feeder system comprising an elastic material and tube assembly. If the safe feeder system is utilised, then the elastic member forming part of the safe feeder system does not have to be attached to the apparatus. Thus, if a fish should escape by breaking a fishing line, then the fish is not required to tow as much equipment as with the above mentioned known apparatus, thereby giving the fish a better chance of escaping. Additionally, the apparatus of the present invention prevents the hook and bait from possibly disappearing between the arms as on known apparatus from where it would be impossible to hook a fish. The apparatus of the present invention ensures that the hook and bait are presented to a feeding fish at all times, thus increasing the fish catching potential.

Preferably, the apparatus is one in which the arms are of a solid construction, and in which each arm has a vent aperture. The vent apertures enable the arms to provide a reduced water-resistance when the apparatus is being reeled in.

Preferably, the vent aperture in each arm is defined by a bottom surface of the arm and an upper surface of the base. Preferably the vent aperture is in the form of a slot. Other types of vent aperture may however be employed.

Preferably, the apparatus is one in which the base tapers in plan from the front part of the base to the rear part of the base. Such a tapering formation aids casting and nose-forward weighting.

Preferably, the platform is positioned at the centre of the four arms. The platform is then able to highlight the optimum position for placing bait. The bait may be general bait and/or hook bait. Preferably the platform is a concave platform but a flat or other type of platform may be employed. If desired, the platform may be positioned other than at the centre of the four arms.

Preferably, the base comprises a weight part and a moulded plastics part. Alternatively, if desired, the base may comprise a single moulding.

When the base comprises the weight part and the moulded plastics part, then the weight part advantageously fits in a recess in the moulded plastics part. This advantageously reduces the amount of weight sitting below the feeder frame. The base thus sits lower on the bed of the water being fished, for example on the bed of a lake, river or canal. The lower profile is not so visible to the fish as would otherwise be the case.

The weight part will usually be a lead weight. Other weight materials may however be employed.

Preferably, the base is forward-weight biased so that the weight is more at the front of the base. This aids casting accuracy, casting distance, and hooking properties.

The apparatus may include a tube extending between the first and second tubular portions, the tube forming part of a safe feeder system comprising an elastic material and tube assembly. The apparatus of the present invention offers an angler the opportunity of using the safe feeder system or an inline system.

Advantageously, the base is of a colour to blend in with the bed of the water being fished, for example the bed of a lake, river or canal. This helps to make the apparatus less noticeable to fish.

The apparatus of the present invention may include interchangeable weights for the base.

The apparatus of the present invention may be made of any suitable and appropriate materials including lead or other weight material for the base, and various types of plastic materials for the arms. The apparatus may be made in various sizes with various sized arms. When a platform is employed, this may also be of various sizes. The platform may be a concave platform having a deeper or shallower recess as may be desired.

Embodiments of the invention will now be described solely by way of example and with reference to the accompanying drawings in which:
Figure 1 is a perspective view from above and the rear of a first upper moulded plastics part of apparatus of the present invention;
Figure 2 is a view from above and the front of the moulded plastics part of the apparatus shown in Figure 1;
Figure 3 is a top plan view of the moulded plastics part of the apparatus shown in Figure 1;
Figure 4 is a side view of the moulded plastics part of the apparatus shown in Figure 1;
Figure 5 is a front end view of the moulded plastics part of the apparatus shown in Figure 1;
Figure 6 is a perspective view from above and the rear like Figure 1 but shows a weight part of the apparatus of the invention;
Figure 7 is a side view of the weight part of the apparatus of the invention shown in Figure 6;
Figures 8, 9, 10 and 11 are views like Figures 2, 3, 4 and 5 but show a second moulded plastics part; and
Figures 12, 13, 14 and 15 are views like Figures 2, 3, 4 and 5 but show a third moulded plastics part.

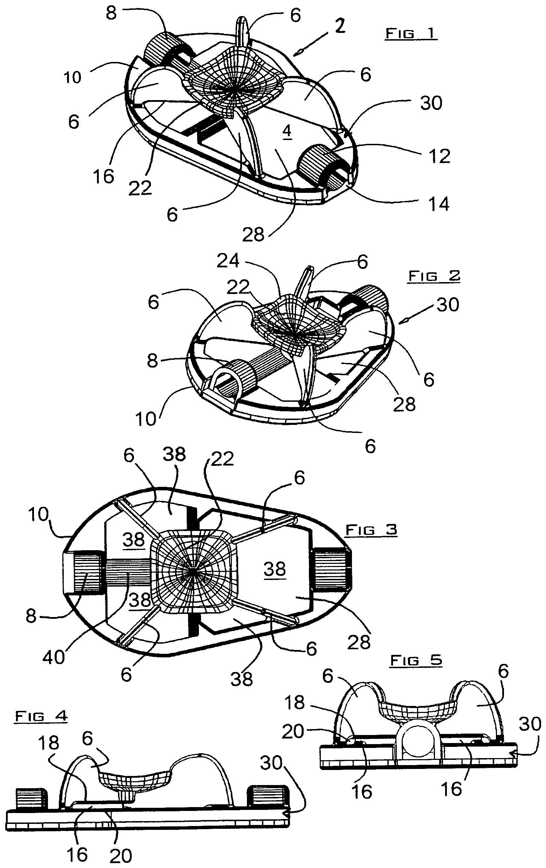

Referring Figures 1 - 7, there is shown apparatus 2 for receiving bait for fishing. The apparatus 2 comprises a weighted base 4, and four arms 6 which upstand from the base 4. A first tubular portion 8 is at a front part 10 of the base 4. A second tubular portion 12 is at a rear part 14 of the base 4. The apparatus 2 is such that the four arms 6 define an X-shape as shown in Figures 1, 2 and 3. The X-shape of the four arms 6 advantageously offers optimum grip for receiving a general bait which is chosen by the angler, and which is pressed and moulded by hand or with a moulding device on the base 4 and around the arms 6. After the general bait has been pressed and moulded onto the base 4 and around the arms 6, hook bait is laid on top of the general bait. The hook bait is then covered with more general bait which is pressed and moulded into shape. The loaded and baited apparatus 2 is then attached to a fishing line and it is ready for use as a method feeder. An important advantage of the apparatus of the present invention over known method feeders is the construction of the four arms in an X-shape, which offers optimum grip for the general bait and optimum placement for the hook bait. The general bait may be tiny size fishing pellets, for example 1, 2 or 3mm fishing pellets. Alternatively, the general bait may be a ground bait. The ground bait may be a fine textured bait, like breadcrumbs, that can be wetted and moulded on the apparatus 2.

The arms 6 are of a solid construction. Each arm 6 has a vent aperture 16. The vent apertures 16 enable water to pass through the arms 6 so that the apparatus 2 offers less resistance when being reeled in. As can best be appreciated from Figures 4 and 5, the vent aperture 16 in each arm 6 is defined by a bottom surface 18 of the arm 6 and an upper surface 20 of the base 4. As best appreciated from Figure 4, the vent aperture 16 is in the form of a slot.

Figures 1, 2 and 3 show how the base 4 tapers in plan from the front part 10 of the base 4 to the rear part 14 of the base 4. This tapering of the base 4 aids casting and nose-forward weighting.

The apparatus 2 includes a platform 22 for receiving some of the bait. The platform 22 is positioned at the centre of the four arms 6. The platform 22 is spaced apart from the base 4, and extends transversely with respect to the four arms 6. In plan view, the platform 22 extends beyond sides of the four arms 6 and thereby extends over the base 4. This construction highlights the best position to place the hook and the hook bait in amongst the general bait. As can be appreciated from Figures 1 and 2, the platform 22 is a concave platform. The concave platform has a peripheral lip 24.

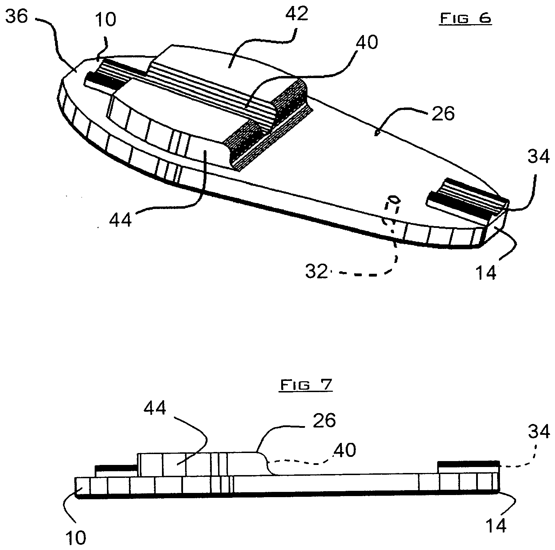

The base 4 is formed of a weight part 26 as shown in Figures 6 and 7, and a bottom part 28 of a moulded plastics part 30 shown in Figures 1 - 5. The bottom part 28 of the moulded plastics part 30 fits over the top of the weight part 26 shown in Figures 6 and 7. The weight part 26 is made of lead. The moulded plastics part 30 is made of any suitable and appropriate plastics material. The weight part 26 and the bottom part 28 of the moulded plastics part 30 have complementary mating surfaces as can be appreciated from Figures 1 - 7. The weight part 26 fits in a recess in the bottom part 28. This reduces the overall amount of the weight part 26 sitting below the moulded plastics part 30 of the apparatus 2. This enables the apparatus 2 to have a lower profile than it would otherwise have, and thus the apparatus 2 is able to sit on the bed of the water being fished, for example the bed of a lake, river or canal, and be less visible than it would be if the weight part 26 were extending further below the bottom part 28 of the moulded plastics part 30.

As can be appreciated from the construction of the weight part 26 as shown in Figure 6, the base 4 is forward-weight biased so that the weight is more at the front of the base 4. This aids in casting accuracy, casting distance, and hooking properties.

The apparatus 2 affords the opportunity of including a tube (not shown) extending between the first and second tubular portions 8, 12. The tube is able to form part of a safe feeder elastication system comprising an elastic material and tube assembly. With such a safe feeder system, a piece of elastic material (not shown) is able to be secured such that in the event that a hooked fish should break the fishing line and escape, then it is not necessary for the fish to tow behind it the entire apparatus 2.

The moulded plastics part 30 is advantageously moulded to be of a colour to blend in with the bed of the water being fished. A single colour or multiple camouflage colours may be employed.

The apparatus 2 is advantageous from a number of aspects. As mentioned above, the X-shape defined by the four arms 6 offers optimum grip for the bait applied to the apparatus. The platform 22 affords more grip for bait applied to the apparatus 2, and also indicates the optimum position for the hook and its hook bait. The vent apertures 16 enable water to pass through the arms 6, and this helps the apparatus 2 to be reeled in with less resistance than would occur if the arms 6 did not have the vent apertures 16. The tapering of the base 4 from the front part to the rear part aids in casting and nose-forward weighting. The forward weighting itself aids in casting accuracy, good casting distances, and hooking properties. The weight part 26 is easily secured to the moulded plastics part 30, for example by holes 32 drilled around the periphery of the weight part 26 (only one being shown for ease of illustration). The holes 32 are for receiving appropriate fixing means such for example as rivets, screws or plastic pins.

Figure 6 shows how the weight part 26 is moulded with a locator portion 34 for receiving the underneath of the bottom part 28 adjacent the second tubular portion 12. Similarly, the weight part 26 has a locator portion 36 for receiving the underneath of the bottom part 28 adjacent the first tubular portion 8. The moulded plastics part 30 has a channel 38 for receiving the tube of a safe feeder system comprising an elastic material and tube assembly. Thus the safe feeder system can be used if desired. The channel 38 locates in a channel 40 formed in the upper surface of the weight part 26. Raised side parts 42, 44 form extra weight for providing the weight bias to the front part 10 of the base 4.

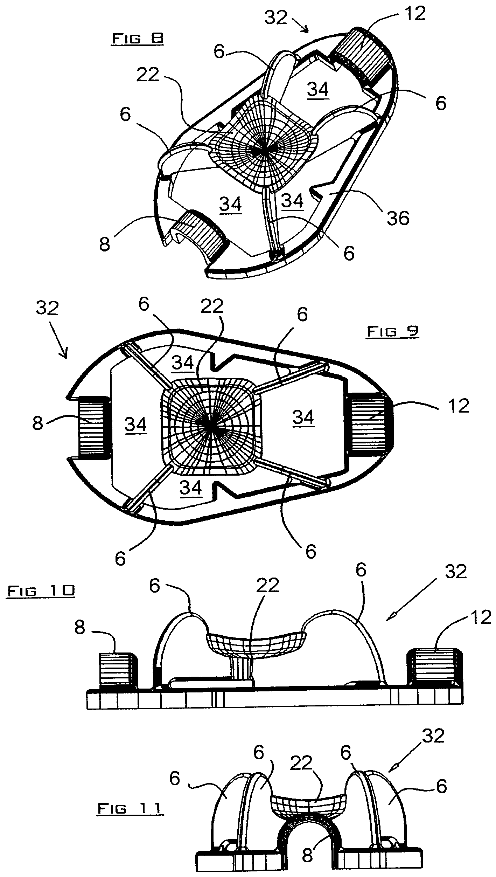

Figures 8 - 11 show a second moulded plastics part 32 in which similar parts as in Figures 2 - 5 have been given the same reference numerals for ease of comparison and understanding. In Figures 8 - 11, it will be seen that the moulded plastics part 32 is like the moulded plastics part 30 shown in Figures 2 - 5 but is of an open construction having apertures 34 between the arms 6, the platform 22 and a periphery 36 of the moulded plastics part 32. In contrast, the plastics part 30 has solid portions 38 and a groove 40 as shown in Figure 3.

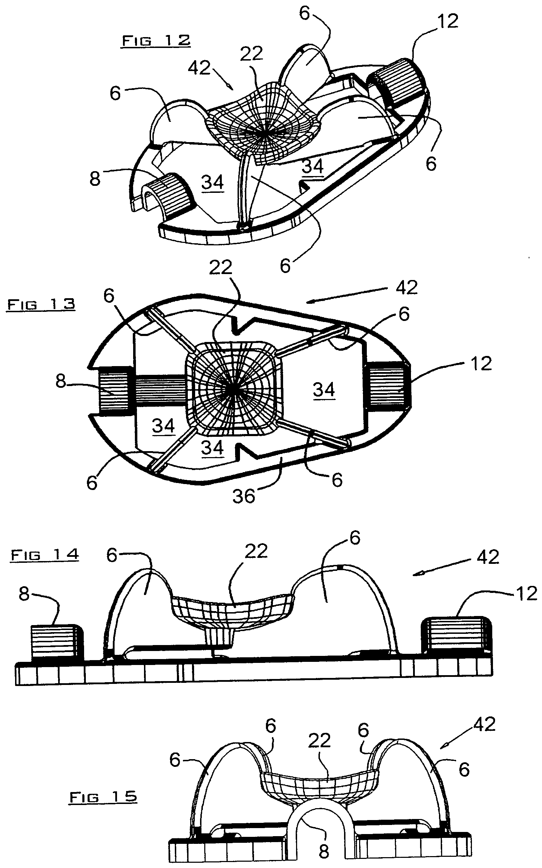

Figures 12 - 15 show a third moulded plastics part 42 which is similar to the second moulded plastics part 32. Similar parts have been given the same reference numerals for ease of comparison and understanding. Figures 12 - 15 show a 28 gram feeder frame, whereas Figures 8 - 11 show a 24 gram feeder frame.

It is to be appreciated that the embodiments of the invention described above with reference to the accompanying drawings have been given by way of example only and that modifications may be effected. Thus, for example, the weight part 26 and the moulded plastics part 30 may be secured together by a plurality of pegs, for example four,pegs, protruding from the base of the moulded plastics, part 30 and passing through the same number of holes in the weight part 26. In an alternative construction, the base of the moulded plastics part 30 may be provided with the holes and the weight part 26 may be provided with the pegs. This alternative construction may provide a more secure fitment of the weight part 26 and the plastics part 30. The pegs may be in the form of peg up-stands. If desired, the weight part 26 and the moulded plastics part 30 may be produced as a single moulded item. Other shapes may be employed for the arms 6, the vent apertures 16, the platform 22, the weight part 26 and the moulded plastics part 30. The weight part 26 may be made in various weights and sizes for providing a varying weight facility for the apparatus 2. The present invention extends to the apparatus with or without a safe feeder system comprising an elastic material and tube assembly. The peripheral lip 24 may be omitted. Individual components shown in the drawings are not limited to use in their drawings and they may be used in other drawings and in all aspects of the invention.

## Claims

1. Apparatus (2) for receiving bait for fishing, which apparatus (2) comprises a weighted base (4), four arms (6) which upstand from the base (4), a first tubular portion (8) at a front part (10) of the base (4), a second tubular portion (12) at a rear part (14) of the base (4), and a platform (22) for receiving some of the bait,
wherein
(i) the four arms (6) define an X-shape;
(ii) the platform (22) is spaced apart from the base (4); and
(iii) the platform (22) extends traversely with respect to the four arms (6); and the apparatus (2) being **characterized in that**:
(iv) in plan view the platform (22) extends beyond sides of the four arms (6) and thereby extends over the base (4).

2. Apparatus (2) according to claim 1 in which the arms (6) are of a solid construction, and in which each arm (6) has a vent aperture (16).

3. Apparatus (2) according to claim 2 in which the vent aperture (16) in each arm (6) is defined by a bottom surface (18) of the arm (6) and an upper surface (20) of the base (4).

4. Apparatus (2) according to claim 2 or claim 3 in which the vent aperture (16) is in the form of a slot.

5. Apparatus (2) according to any one of the preceding claims in which the base (4) tapers in plan from the front part (10) of the base (4) to the rear part (14) of the base (4).

6. Apparatus (2) according to any one of the preceding claims in which the platform (22) is positioned at the centre of the four arms (6).

7. Apparatus (2) according to any one of the preceding claims in which the platform (22) is a concave platform.

8. Apparatus (2) according to any one of the preceding claims in which the base (4) comprises a weight part (26) and a moulded plastics part (30).

9. Apparatus (2) according to claim 8 in which the weight part (26) fits in a recess in the moulded plastics part.

10. Apparatus (2) according to claim 8 or claim 9 in which the weight part (26) is a lead weight part.

11. Apparatus (2) according to any one of the preceding claims in which the base (4) is forward-weight biased so that the weight is more at the front part of the base.

12. Apparatus (2) according to any one of the preceding claims and including a tube extending between the first and second tubular portions (8, 12), the tube forming part of a safe feeder system comprising an elastic material and tube assembly.

13. Apparatus (2) according to any one of the preceding claims in which the base (4) is of a colour to blend in with the bed of the water being fished.

14. Apparatus (2) according to any one of the preceding claims and including interchangeable weights for the base (4).

## Patentansprüche

1. Vorrichtung (2) zur Aufnahme eines Fischköders, wobei die Vorrichtung (2) eine gewichtete Basis (4), vier von der Basis (4) aufrecht stehende Arme (6), einen ersten röhrenförmigen Abschnitt (8) an einem vorderen Teil (10) der Basis (4), einen zweiten röhrenförmigen Abschnitt (12) an einem hinteren Teil (14) der Basis (4) und eine Plattform (22) zur Aufnahme eines Teils des Köders umfasst,
wobei
(i) die vier Arme (6) eine X-Form definieren;
(ii) die Plattform (22) im Abstand von der Basis (4) angeordnet ist; und
(iii) sich die Plattform (22) quer bezüglich der vier Arme (6) erstreckt;
und die Vorrichtung (2) **dadurch gekennzeichnet, ist, dass**:
(iv) sich die Plattform (22) in der Draufsicht über Seiten der vier Arme (6) hinaus und dadurch über die Basis (4) erstreckt.

2. Vorrichtung (2) nach Anspruch 1, wobei die Arme (6) massiv konstruiert sind und wobei jeder Arm (6) eine Lüftungsöffnung (16) aufweist.

3. Vorrichtung (2) nach Anspruch 2, wobei die Lüftungsöffnung (16) in jedem Arm (6) von einer Unterseite (18) des Arms (6) und einer Oberseite (20) der Basis (4) definiert wird.

4. Vorrichtung (2) nach Anspruch 2 oder Anspruch 3, wobei die Lüftungsöffnung (16) in Form eines Schlitzes vorliegt.

5. Vorrichtung (2) nach einem der vorhergehenden Ansprüche, wobei sich die Basis (4) in der Draufsicht vom vorderen Teil (10) der Basis (4) zum hinteren Teil (14) der Basis (4) verjüngt.

6. Vorrichtung (2) nach einem der vorhergehenden Ansprüche, wobei die Plattform (22) in der Mitte der vier Arme (6) angeordnet ist.

7. Vorrichtung (2) nach einem der vorhergehenden Ansprüche, wobei die Plattform (22) eine konkave Plattform ist.

8. Vorrichtung (2) nach einem der vorhergehenden Ansprüche, wobei die Basis (4) ein Gewichtsteil (26) und ein geformtes Kunststoffteil (30) umfasst.

9. Vorrichtung (2) nach Anspruch 8, wobei das Gewichtsteil (26) in eine Aussparung im geformten Kunststoffteil passt.

10. Vorrichtung (2) nach Anspruch 8 oder Anspruch 9, wobei das Gewichtsteil (26) ein Bleigewichtsteil ist.

11. Vorrichtung (2) nach einem der vorhergehenden Ansprüche, wobei die Basis (4) nach gewichtsmäßig nach vorne vorgespannt ist, so dass das Gewicht mehr am vorderen Teil der Basis ist.

12. Vorrichtung (2) nach einem der vorhergehenden Ansprüche und umfassend eine Röhre, die sich zwischen den ersten und zweiten röhrenförmigen Abschnitten (8, 12) erstreckt, wobei die Röhre Teil eines sicheren Fütterungssystems bildet, das ein elastisches Material und eine Röhrenanordnung umfasst.

13. Vorrichtung (2) nach einem der vorhergehenden Ansprüche, wobei die Basis (4) eine Farbe aufweist, die sich in das Wasserbett, in dem gefischt wird, einfügt.

14. Vorrichtung (2) nach einem der vorhergehenden Ansprüche und umfassend auswechselbare Gewichte für die Basis (4).

## Revendications

1. Appareil (2) pour recevoir des appâts de pêche, ledit appareil (2) comprenant une base lestée (4), quatre bras (6) qui se dressent à partir de la base (4), une première partie tubulaire (8) à une partie avant (10) de la base (4), une seconde partie tubulaire (12) à une partie arrière (14) de la base (4), et une plate-forme (22) destinée à recevoir une partie des appâts, dans lequel:
(i) les quatre bras (6) définissent une forme de X;
(ii) la plate-forme (22) est espacée de la base (4) ; et
(iii) la plate-forme (22) s'étend transversalement par rapport aux quatre bras (6),
et l'appareil (2) étant **caractérisé en ce que**:
(iv) dans une vue en plan, la plate-forme (22) s'étend au-delà des côtés des quatre bras (6) et s'étend de ce fait au-dessus de la base (4).

2. Appareil (2) selon la revendication 1, dans lequel les bras (6) sont de structure solide, et dans lequel chaque bras (6) comporte une ouverture d'évent (16).

3. Appareil (2) selon la revendication 2, dans lequel l'ouverture d'évent (16) dans chaque bras (6) est définie par une surface inférieure (18) du bras (6) et une surface supérieure (20) de la base (4).

4. Appareil (2) selon la revendication 2 ou la revendication 3, dans lequel l'ouverture d'évent (16) se présente sous la forme d'une fente.

5. Appareil (2) selon l'une quelconque des revendications précédentes, dans lequel la base (4) s'amincit en plan à partir de la partie avant (10) de la base (4) jusqu'à la partie arrière (14) de la base (4).

6. Appareil (2) selon l'une quelconque des revendications précédentes, dans lequel la plate-forme (22) est positionnée au centre des quatre bras (6).

7. Appareil (2) selon l'une quelconque des revendications précédentes, dans lequel la plate-forme (22) est une plate-forme concave.

8. Appareil (2) selon l'une quelconque des revendications précédentes, dans lequel la base (4) comprend une partie de lest (26) et une partie en plastique moulé (30).

9. Appareil (2) selon la revendication 8, dans lequel la partie de lest (26) s'agence dans un évidement dans la partie en plastique moulé.

10. Appareil (2) selon la revendication 8 ou la revendication 9, dans lequel la partie de lest (26) est une partie de lest en plomb.

11. Appareil (2) selon l'une quelconque des revendications précédentes, dans lequel la base (4) est chargée par le lest à l'avant de telle sorte que le poids soit plus important à la partie avant de la base.

12. Appareil (2) selon l'une quelconque des revendications précédentes et comprenant un tube qui s'étend entre les première et deuxième parties tubulaires (8, 12), le tube faisant partie d'un système d'alimentation de sécurité comprenant un matériau élastique et un ensemble de tube.

13. Appareil (2) selon l'une quelconque des revendications précédentes, dans lequel la couleur de la base (4) est une couleur qui se fond avec le lit de l'étendue d'eau de la pêche.

14. Appareil (2) selon l'une quelconque des revendications précédentes et comprenant des poids interchangeables pour la base (4).
